(19) Europäisches Patentamt
European Patent Office
Office européen des brevets

(11) EP 3 266 823 B1

(12) **EUROPEAN PATENT SPECIFICATION**

(45) Date of publication and mention of the grant of the patent:
**15.12.2021 Bulletin 2021/50**

(21) Application number: **15883995.1**

(22) Date of filing: **11.08.2015**

(51) Int Cl.:
*C08L 23/04* (2006.01) *C08K 5/13* (2006.01)
*C08K 5/14* (2006.01) *C08K 5/17* (2006.01)
*C08K 5/372* (2006.01) *C08L 101/02* (2006.01)
*H01B 3/44* (2006.01) *H01B 7/02* (2006.01)
*C08K 5/134* (2006.01) *C08K 5/3435* (2006.01)
*C08L 23/06* (2006.01)

(86) International application number:
**PCT/JP2015/072810**

(87) International publication number:
**WO 2016/139829 (09.09.2016 Gazette 2016/36)**

(54) **CROSSLINKABLE RESIN COMPOSITION AND ELECTRICAL WIRE AND CABLE**

VERNETZBARE HARZZUSAMMENSETZUNG UND ELEKTRISCHER DRAHT UND KABEL

COMPOSITION DE RÉSINE RÉTICULABLE ET FIL ET CÂBLE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2015 JP 2015043244**

(43) Date of publication of application:
**10.01.2018 Bulletin 2018/02**

(73) Proprietor: **Eneos Nuc Corporation**
**Kawasaki-ku**
**Kawasaki-shi**
**Kanagawa 2100862 (JP)**

(72) Inventors:
- **HAYASHI, Kosei**
  **Tokyo 108-0075 (JP)**
- **OHSEKI, Tomohiro**
  **Tokyo 108-0075 (JP)**

(74) Representative: **Grünecker Patent- und Rechtsanwälte**
**PartG mbB**
**Leopoldstraße 4**
**80802 München (DE)**

(56) References cited:
**JP-A- H 051 180** **JP-A- S5 879 033**
**JP-A- S6 042 441** **JP-A- S63 260 939**
**JP-A- 2002 083 516** **JP-A- 2002 088 200**
**JP-A- 2003 535 205** **JP-A- 2004 530 741**
**JP-A- 2005 187 595** **JP-A- 2011 258 520**
**JP-A- 2012 204 044** **US-A- 5 447 576**

- **DATABASE WPI Week 201279 Thomson Scientific, London, GB; AN 2012-P86170 XP002776148, -& JP 2012 227453 A (MITSUI CHEM INC) 15 November 2012 (2012-11-15)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 266 823 B1

## Description

### Technical Field

The present invention relates to a crosslinkable resin composition and an electric wire/cable. More specifically, the present invention relates to a crosslinkable resin composition containing an ethylene-based resin and having good electrical insulation properties, and an electric wire/cable obtained by forming, as an insulating coating layer, a crosslinked product of the resin composition on a conductor.

### Background Art

In general, insulation coated electric wires/cables for electric power are produced by coating a conductor with a crosslinkable resin composition by extrusion molding, and then crosslinking the crosslinkable resin composition to form an insulating coating layer.

For crosslinkable resin compositions used in insulation coated electric wires/cables, resistance to blooming and color change, scorch resistance, process stability, water-tree resistance, thermal deformation resistance, heat aging resistance, etc. are required.

As a resin composition that satisfies these required characteristics, the present applicant has proposed a crosslinkable resin composition containing an ethylene-based resin, a stabilizer, and an organic peroxide, in which a hindered phenol stabilizer, a dialkyl thiodipropionate stabilizer, and a hindered amine stabilizer are used in combination as the stabilizer (refer to, PTL 1 below).

The length (production unit) of an electric wire/cable that is continuously produced by extrusion molding is desirably as long as possible.

This is because, by increasing the production unit of electric wires/cables, the number of connecting joints between the electric wires/cables can be reduced, and the probability of failure of the electric power system can be thereby reduced.

However, it is not easy to realize an increase in the production unit of an electric wire/cable, in other words, to continuously form an insulating coating layer by extrusion molding for a long time.

Specifically, in an extruder charged with a crosslinkable resin composition for the purpose of forming an insulating coating layer of a cable, a screen mesh is clogged and blocked by a scorched (partially crosslinked) resin component and a stabilizer having a relatively high viscosity. Consequently, the pressure in the extruder increases, and stable extrusion molding cannot be performed.

Furthermore, in general, an extruder for forming an insulating coating layer of a cable is configured so that, when the pressure in the extruder reaches a certain value or more, a limit switch operates to stop the extrusion operation in order to prevent a screen mesh from breaking and to prevent a motor from being overloaded. When the extrusion operation stops, a desired length of the production unit cannot be obtained.

For the reasons of the realization of a high voltage of an electric power cable in recent years, the prevention of a dielectric breakdown accident during transmission of electricity, and the like, it has been required to prevent foreign matter from mixing in an insulating coating layer as much as possible. Accordingly, a screen mesh having a smaller mesh size has also been often used in an extruder. As a result, clogging of the screen mesh is accelerated and blocking easily occurs. Thus, the pressure in the extruder increases within a relatively short time, and the extrusion operation stops. Consequently, it is very difficult to continuously form an insulating coating layer by extrusion molding for a long time (to realize an increase in the production unit of an electric wire/cable).

### Citation List

#### Patent Literature

PTL 1: Japanese Unexamined Patent Application Publication No. 2002-83516

### Summary of Invention

#### Technical Problem

In view of the circumstances described above, the inventors of the present invention have proposed a crosslinkable resin composition that contains 100 parts by mass of an ethylene-based resin, a stabilizer containing 0.001 to 0.5 parts by mass of a hindered amine light stabilizer having a melting point or a glass transition point of 100°C or lower, and 0.5 to 3.0 parts by mass of an organic peroxide, in which molecular weights of all the compounds constituting the

stabilizer are each 1,500 or less (refer to, Japanese Patent Application No. 2014-244512).

According to this crosslinkable resin composition, an increase in the pressure does not easily occur in an extruder charged with the crosslinkable resin composition, and an insulating coating layer can be continuously formed by extrusion molding for a long time. Accordingly, an increase in the production unit of an electric wire/cable can be realized.

However, this crosslinkable resin composition has a problem in that the hindered amine light stabilizer, which is a component of the crosslinkable resin composition, is bled out, the content of the hindered amine light stabilizer thereby decreases with time, and, consequently, activity of the organic peroxide maintained by the hindered amine light stabilizer decreases with time. Therefore, this crosslinkable resin composition cannot be stored for a long time.

Furthermore, in the case where the content of the hindered amine light stabilizer in the crosslinkable resin composition is high (for example, 0.01 parts by mass or more relative to 100 parts by mass of the ethylene-based resin), the amount of hindered amine light stabilizer bled out also increases. Therefore, when extrusion molding of such a crosslinkable resin composition is performed, the crosslinkable resin composition slips on a screw. As a result, there may be a problem in that the amount of resin composition extruded (the amount of resin composition discharged) varies, and stable extrusion molding cannot be performed.

The present invention has been made in view of the circumstances described above.

An object of the present invention is to provide a crosslinkable resin composition which does not easily cause an increase in the pressure in an extruder charged with the crosslinkable resin composition and a variation in the amount of discharge, and with which an insulating coating layer can be continuously and stably formed by extrusion molding for a long time, thereby realizing an increase in the production unit of an electric wire/cable and achieving a good long-term storage property.

Another object of the present invention is to provide an electric wire/cable whose production unit can be larger (longer) than that of an electric wire/cable produced using a publicly known crosslinkable resin composition.

Solution to Problem

(1) A crosslinkable resin composition of the present invention contains 100 parts by mass of an ethylene-based resin (A), a stabilizer (B) containing 0.001 to 0.5 parts by mass of a hindered amine light stabilizer (B3), and 0.5 to 3.0 parts by mass of an organic peroxide (C), wherein the stabilizer (B) further contains a hindered phenol stabilizer (B1) and a dialkyl thiodipropionate stabilizer (B2) in addition to the hindered amine light stabilizer (B3),

in which the hindered amine light stabilizer (B3) is a mixture of a low-molecular-weight hindered amine compound having a molecular weight of 100 to 1,000 and a high-molecular-weight hindered amine compound having a molecular weight of 1,500 to 5,000, and
the hindered amine light stabilizer (B3) has a reduced viscosity of 3.5 to 5.5 $cm^3/g$ measured at a temperature of 40°C and a reduced viscosity of 2.0 to 3.5 $cm^3/g$ measured at a temperature of 110°C in accordance with ISO 1628-1 or JIS K7367-1.

(2) In the crosslinkable resin composition of the present invention, the hindered amine light stabilizer (B3) preferably has a weight-average molecular weight (Mw) of 700 to 2,300.
(3) In the crosslinkable resin composition of the present invention, a ratio of the high-molecular-weight hindered amine compound to the hindered amine light stabilizer (B3) is preferably 30% to 60% by mass.
(4) A preferred crosslinkable resin composition of the present invention contains 100 parts by mass of an ethylene-based resin (A),

0.01 to 1.0 part by mass of a hindered phenol stabilizer (B1),
0.005 to 0.6 parts by mass of a dialkyl thiodipropionate stabilizer (B2),
0.001 to 0.5 parts by mass of a hindered amine light stabilizer (B3), and
0.5 to 3.0 parts by mass of an organic peroxide (C),
in which the hindered amine light stabilizer (B3) is a mixture of 40% to 70% by mass of a low-molecular-weight hindered amine compound having a molecular weight of 100 to 1,000 and 60% to 30% by mass of a high-molecular-weight hindered amine compound having a molecular weight of 1,500 to 5,000,
the hindered amine light stabilizer (B3) has a reduced viscosity of 3.9 to 5.4 $cm^3/g$ measured at a temperature of 40°C and a reduced viscosity of 2.5 to 3.5 $cm^3/g$ measured at a temperature of 110°C in accordance with ISO 1628-1 or JIS K7367-1, and
the hindered amine light stabilizer (B3) has a weight-average molecular weight (Mw) of 900 to 2,100.

(5) An electric wire/cable of the present invention includes a conductor, and an insulating coating layer that covers the conductor, the insulating coating layer being formed by crosslinking the crosslinkable resin composition of the present invention.

Advantageous Effects of Invention

According to the crosslinkable resin composition of the present invention, an increase in the pressure in an extruder charged with the crosslinkable resin composition and a variation in the amount of discharge do not easily occur, and an insulating coating layer can be continuously and stably formed by extrusion molding for a long time, thereby realizing an increase in the production unit of an electric wire/cable.

According to the crosslinkable resin composition of the present invention, bleeding out of the hindered amine light stabilizer (B3) does not easily occur, and thus a good long-term storage property is also obtained.

According to the electric wire/cable of the present invention, the production unit can be larger (longer) than that of an electric wire/cable produced using a publicly known crosslinkable resin composition.

Accordingly, by using the electric wire/cable (having a long production unit) of the present invention, the number of connecting joints between production units can be reduced, and the probability of failure of the electric power system can be significantly reduced.

Description of Embodiments

The present invention will be described in detail.

<Crosslinkable resin composition>

A crosslinkable resin composition of the present invention contains an ethylene-based resin (A), a stabilizer (B) containing a hindered amine light stabilizer (B3), a hindered phenol stabilizer (B1) and a dialkyl thiodipropionate stabilizer (B2), and an organic peroxide (C).

<Ethylene-based resin (A)>

Examples of the ethylene-based resin (A) contained in the crosslinkable resin composition of the present invention include, but are not particularly limited to, high-pressure process low-density ethylene homopolymers, high-pressure process low-density ethylene copolymers, high-density ethylene copolymers, medium-density ethylene copolymers, linear low-density ethylene copolymers, and linear very low-density ethylene copolymers.

These ethylene (co)polymers can be produced by publicly known methods and may be used, as the ethylene-based resin (A), alone or in combination of two or more resins.

Regarding a polymerization catalyst used in the production of the ethylene-based resin (A), in the case of the polymerization by a high-pressure process, examples of the polymerization catalyst include radical-generating catalysts such as organic peroxides, azo compounds, and oxygen. In the case of other polymerization methods, examples of the polymerization catalyst include Ziegler catalysts, Phillips catalysts, and metallocene catalysts.

Examples of an $\alpha$-olefin copolymerized with ethylene in the production of the ethylene-based resin (A) formed of a copolymer include propylene, butene-1, hexene-1, 4-methylpentene-1, octene-1, and decene-1.

Preferred examples of the ethylene-based resin (A) include high-pressure process low-density ethylene homopolymers, high-pressure process low-density ethylene copolymers, and linear low-density ethylene copolymers, all of which have a density of 0.91 to 0.94 g/cm$^3$, in particular, 0.915 to 0.930 g/cm$^3$, and a melt mass-flow rate of 0.01 to 10 g/10 min, in particular, 0.5 to 5 g/10 min.

When an ethylene-based resin having an excessively low density is used, wear resistance of the insulating coating layer that is finally formed tends to degrade. When an ethylene-based resin having an excessively high density is used, flexibility of the insulating coating layer that is finally formed tends to degrade.

An ethylene-based resin having an excessively low melt mass-flow rate has poor processability. On the other hand, when an ethylene-based resin having an excessively high melt mass-flow rate is used, the mechanical strength, thermal deformation resistance, circularity, etc. of the insulating coating layer that is finally formed tend to decrease.

<Stabilizer (B)>

The stabilizer (B) contained in the crosslinkable resin composition of the present invention contains a hindered amine light stabilizer (B3) as an essential component.

Examples of the stabilizer (B) other than the hindered amine light stabilizer (B3) include light stabilizers other

than the hindered amine light stabilizer (B3), antioxidants, and process stabilizers.

The hindered amine light stabilizer (B3), which is an essential stabilizer (B), is a mixture of a low-molecular-weight hindered amine compound having a molecular weight of 100 to 1,000 and a high-molecular-weight hindered amine compound having a molecular weight of 1,500 to 5,000.

Examples of the low-molecular-weight hindered amine compound include compounds represented by general formula (1) below, and dimers to tetramers of the compounds (in this case, $R^1$ represents a divalent to tetravalent group). These may be used alone or in combination of two or more compounds.

[Chem. 1]

General formula (1)

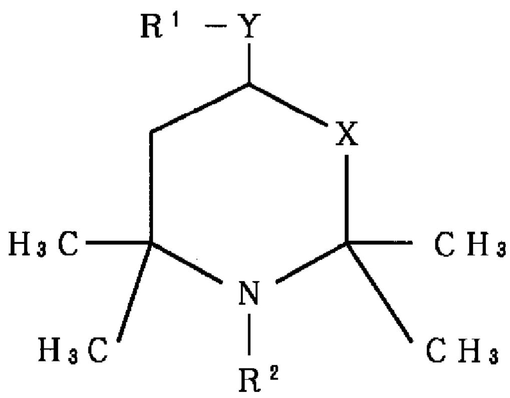

[In general formula (1) above,

- X: -C(O)-, $-CH_2-$
- Y: -O-, $-CH_2-$, -NH-, $-N(CH_3)-$, $-N(C_2H_5)-$, -O-C(O)-
- $R^1$: -H, $-C_nH_{2n+1}$, $-C_6H_5$, $-C_6H_4-CH_3$, $-C_6H_3(CH_3)_2$, $-C_6H_4-C_2H_5$, $-C_6H_{11}$, $-CR^3R^4-$

(when $R^1$ is a divalent group, a group represented by Y is bonded to each end of the group to form a dimer.)

[Chem. 2]

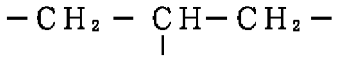
、
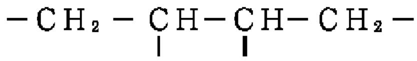

(when $R^1$ is a trivalent group, a group represented by Y is bonded to each end of the group to form a trimer, and when $R^1$ is a tetravalent group, a group represented by Y is bonded to each end of the group to form a tetramer.)

- $R^2$: -H, $-C_nH_{2n+1}$, $-C_6H_5$, $-C_6H_4-CH_3$, $-C_6H_3(CH_3)_2$, $-C_6H_4-C_2H_5$, $-C_6H_{11}$, $-CR^3R^4-$, $-O-C_nH_{2n+1}$, $-O-C_6H_5$, $-O-C_6H_4-CH_3$, $-O-C_6H_3(CH_3)_2$, $-O-C_6H_4-C_2H_5$, $-O-C_6H_{11}$, $-O-C_6H_{10}-CH_3$, $-O-C_6H_9(CH_3)_2$, $-O-C_6H_{10}-C_2H_5$
- $R^3$: -H, $-C_nH_{2n+1}$, $-C_6H_5$, $-C_6H_aR^5_b(OH)_{(5-a-b)}$
- $R^4$: -H, $-C_nH_n$
- $R^5$: -H, $-CH_3$, $-C_2H_5$, $-C_3H_7$, $-C_4H_9$

(in the above, n represents a positive integer of 1 to 8, a and b each represent a positive integer, and a + b = 1 to 4.)]

The low-molecular-weight hindered amine light stabilizer has a molecular weight of 100 to 1,000, and preferably 400 to 900.

Specific examples of the low-molecular-weight hindered amine light stabilizer include tetrakis(1,2,2,6,6-pentamethyl-4-piperidyl)butane-1,2,3,4-tetracalboxylate (LA-52, manufactured by ADEKA Corporation), 2,2,6,6-tetramethyl-4-piperidyl methacrylate (LA-87, manufactured by ADEKA Corporation), and bis(2,2,6,6-tetramethyl-4-piperidyl)sebacate (LA-77, manufactured by ADEKA Corporation or TINUVIN 770, manufactured by BASF). These may be used alone or in combination of two or more compounds.

Examples of the high-molecular-weight hindered amine compound include compounds represented by general formulae (2) to (6) below. These may be used alone or in combination of two or more compounds.

[Chem. 3]

General formula (2)

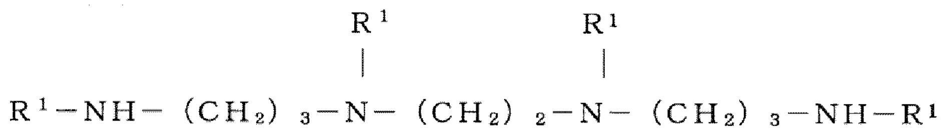

In the formula, $R^1$ represents a monovalent group represented by

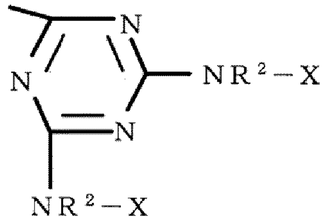

[where X represents a monovalent group represented by

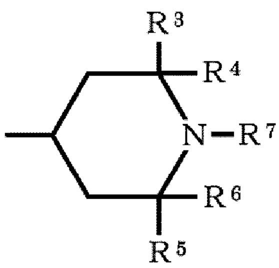

(where $R^3$ to $R^7$ each represent a hydrogen atom or an alkyl group having 1 to 8 carbon atoms), and $R^2$ represents a hydrogen atom or an alkyl group having 1 to 8 carbon atoms].

[Chem. 4]

General formula (3)

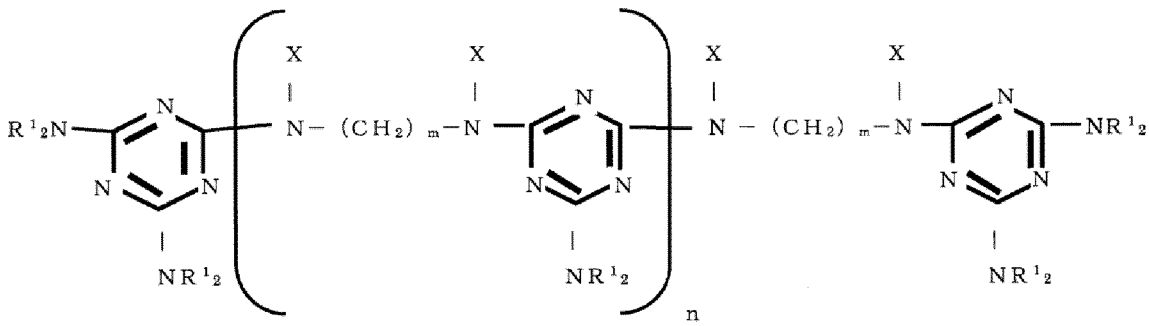

[In the formula, $R^1$ represents a hydrogen atom or an alkyl group having 1 to 8 carbon atoms,

X represents a monovalent group represented by

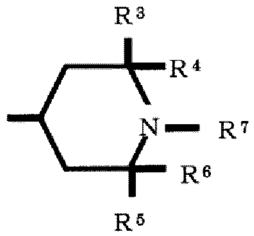

(where $R^3$ to $R^7$ each represent a hydrogen atom or an alkyl group having 1 to 8 carbon atoms), n represents an integer of 1 or more, and m represents an integer of 1 to 8.]

[Chem. 5]

General formula (4)

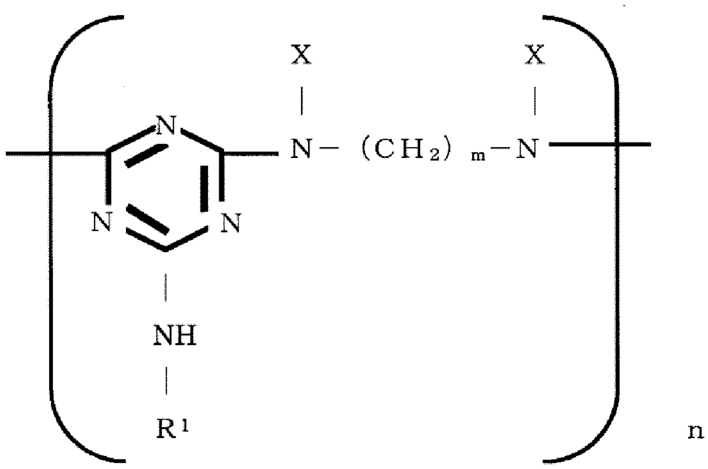

[In the formula, $R^1$ represents a hydrogen atom or an alkyl group having 1 to 8 carbon atoms,

X represents a monovalent group represented by

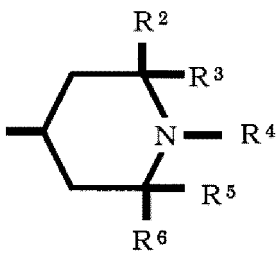

(where $R^2$ to $R^6$ each represent a hydrogen atom or an alkyl group having 1 to 8 carbon atoms), n represents an integer of 1 or more, and m represents an integer of 1 to 8.]

[Chem. 6]

General formula (5)

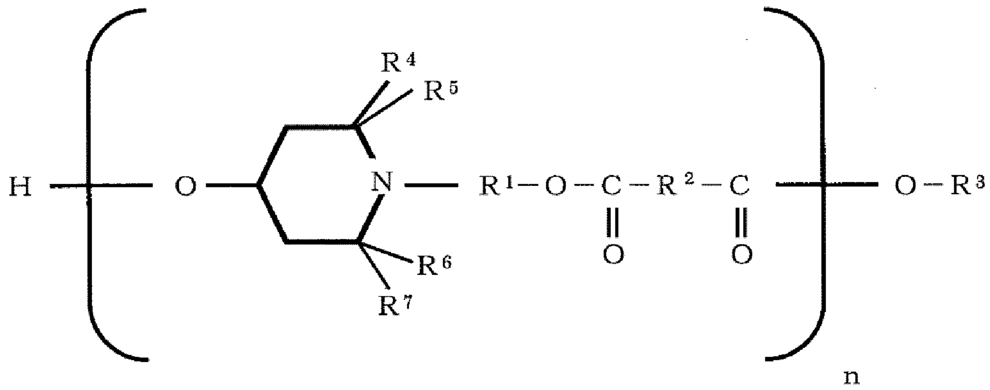

[In the formula, $R^1$ and $R^2$ each represent an alkylene group having 1 to 8 carbon atoms,

$R^3$ to $R^7$ each represent a hydrogen atom or an alkyl group having 1 to 8 carbon atoms, and
n represents an integer of 3 or more.]

[Chem. 7]

General formula (6)

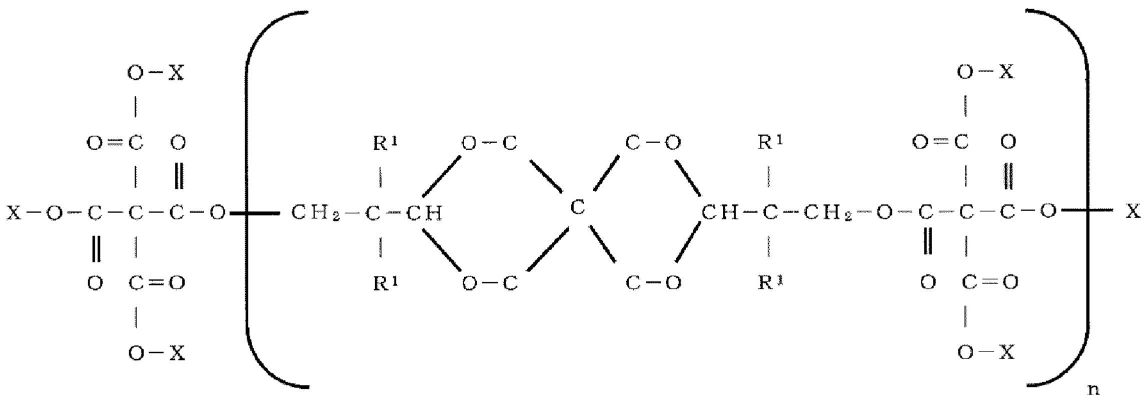

[In the formula, $R^1$ represents a hydrogen atom or an alkyl group having 1 to 8 carbon atoms,

X represents a monovalent group represented by

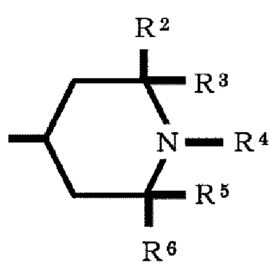

(where $R^2$ to $R^6$ each represent a hydrogen atom or an alkyl group having 1 to 8 carbon atoms), and
n represents an integer of 3 or more.]

The high-molecular-weight hindered amine light stabilizer has a molecular weight (weight-average molecular weight when two or more compounds are used in combination) of 1,500 to 5,000, and preferably 2,000 to 4,000.

A resin composition obtained by using, as the hindered amine light stabilizer (B3), a low-molecular-weight hindered amine compound and a high-molecular-weight hindered amine compound in combination does not easily cause an increase in the pressure in an extruder charged with the resin composition and a variation in the amount of discharge. Thus, an insulating coating layer can be continuously and stably formed by extrusion molding for a long time. In addition, the resulting resin composition also has a good long-term storage property.

When a low-molecular-weight hindered amine compound is used alone as the hindered amine light stabilizer, the low-molecular-weight hindered amine compound in the resulting resin composition is bled out. Consequently, a good long-term storage property of the resin composition is impaired (refer to Comparative Examples 3 and 6 described below), or the amount of the resin composition discharged during extrusion molding varies and extrusion stability is impaired (refer to Comparative Examples 1 and 2 described below).

On the other hand, when a high-molecular-weight hindered amine compound is used alone as the hindered amine light stabilizer, a reduced viscosity of the hindered amine light stabilizer in the resulting resin composition is excessively high. Consequently, the hindered amine light stabilizer causes clogging (blocking) of a screen mesh in an extruder, resulting in an increase in the pressure in the extruder. Thus, extrusion molding cannot be performed for a long time (refer to Comparative Examples 5 and 8 described below).

Herein, a ratio of the high-molecular-weight hindered amine compound to the hindered amine light stabilizer (B3) is preferably 30% to 60% by mass.

In this case, the high-molecular-weight hindered amine compound and the low-molecular-weight hindered amine compound are mixed in a balanced manner. Consequently, both an increase in the pressure in an extruder charged with the resulting resin composition and a variation in the amount of discharge can be reliably suppressed. Furthermore, good extrusion stability can be exhibited, and the resulting resin composition has a good long-term storage property.

The hindered amine light stabilizer (B3) contained in the crosslinkable resin composition of the present invention has a reduced viscosity of 3.5 to 5.5 $cm^3/g$, preferably 3.9 to 5.4 $cm^3/g$ measured at a temperature of 40°C in accordance with ISO 1628-1 or JIS K 7367-1.

The hindered amine light stabilizer (B3) has a reduced viscosity of 2.0 to 3.5 $cm^3/g$, preferably 2.5 to 3.5 $cm^3/g$ measured at a temperature of 110°C in accordance with ISO 1628-1 or JIS K 7367-1.

In the hindered amine light stabilizer, when the reduced viscosity at 40°C exceeds 5.5 $cm^3/g$ or the reduced viscosity at 110°C exceeds 3.5 $cm^3/g$, such a hindered amine light stabilizer having a high viscosity causes clogging (blocking) of a screen mesh in an extruder, resulting in an increase in the pressure in the extruder. Thus, extrusion molding cannot be performed for a long time (refer to Comparative Examples 4 and 5 and Comparative Examples 7 and 8 described below).

On the other hand, a hindered amine light stabilizer having a reduced viscosity at 40°C of less than 3.5 $cm^3/g$ or a reduced viscosity at 110°C of less than 2.0 $cm^3/g$ easily causes bleeding out. In a resin composition containing such a stabilizer, the amount of discharge during extrusion molding varies and extrusion stability is impaired (refer to Comparative Examples 1 and 2 described below), or long-term storage property is impaired (refer to Comparative Examples 3 and 6 described below).

The weight-average molecular weight (Mw) of the hindered amine light stabilizer (B3) contained in the crosslinkable resin composition of the present invention is preferably 700 to 2,300, and more preferably 900 to 2,100.

Herein, the weight-average molecular weight (Mw) of the hindered amine light stabilizer (B3), which is a mixture of at least one low-molecular-weight hindered amine compound and at least one high-molecular-weight hindered amine compound, is a calculated value determined by the formula below from molecular weights ($M_i$) and molar fractions ($n_i$) of the hindered amine compounds constituting the mixture.

$$\text{Formula: } Mw = \Sigma(n_i M_i^2)/\Sigma(n_i M_i)$$

The hindered amine light stabilizer (B3) having a weight-average molecular weight (Mw) of 700 or more, in particular, 900 or more does not easily cause bleeding out. A resin composition containing such a hindered amine light stabilizer (B3) has a good long-term storage property. Furthermore, a variation in the amount of the resin composition discharged from an extruder charged with the resin composition is small, and thus the resin composition has good extrusion stability. On the other hand, regarding a resin composition containing a hindered amine light stabilizer having a weight-average molecular weight (Mw) of 2,300 or less, in particular, 2,100 or less, a rate of increase in the pressure in an extruder charged with the resin composition is low, and extrusion molding can be performed for a long time.

The content of the hindered amine light stabilizer (B3) in the crosslinkable resin composition of the present invention is 0.001 to 0.5 parts by mass, preferably 0.003 to 0.1 parts by mass, and more preferably 0.005 to 0.02 parts

by mass relative to 100 parts by mass of the ethylene-based resin (A).

A resin composition that does not contain the hindered amine light stabilizer (B3) or that has an excessively low content of the hindered amine light stabilizer (B3) cannot be stored for a long time because activity of an organic peroxide (C) described below significantly decreases with time. Furthermore, water produced by secondary degradation of the organic peroxide (C) increases and electrical properties (insulating properties) are impaired (refer to Comparative Example 9 described below).

On the other hand, when the content is excessively high, the effect for storage stability is saturated and electrical properties and heat aging resistance may be impaired.

The crosslinkable resin composition of the present invention contains a stabilizer (B) other than the hindered amine light stabilizer (B3) including a hindered phenol stabilizer (B1) and a dialkyl thiodipropionate stabilizer (B2).

Examples of the hindered phenol stabilizer (B1) include compounds having a hindered phenol structure and having a molecular weight of 1,500 or less.

Specific examples of the hindered phenol stabilizer (B1) include 4,4'-thiobis-(3-methyl-6-t-butylphenol) (SEENOX BCS, manufactured by Shipro Kasei Kaisha, Ltd.), 4,4'-thiobis-(6-t-butyl-o-cresol) (ETHANOX 736, manufactured by Ethyl Corporation), tetrakis[methylene-3-(3',5'-di-t-butyl-4'-hydroxyphenyl)propionate]methane (Irganox 1010, manufactured by BASF), N,N'-bis[3-(3,5-di-t-butyl-4-hydroxyphenyl)propionyl]hydrazine (Irganox 1024, manufactured by BASF), 1,3,5-tris(4-t-butyl-3-hydroxy-2,6-dimethylbenzyl)isocyanuric acid (Cyanox 1790, manufactured by CYTEC Industries Inc.), 1,3,5-trimethyl-2,4-6-tris(3,5-di-t-butyl-4-hydroxybenzyl)benzene (ETHANOX 330, manufactured by Albemarle Corporation), triethylene glycol-bis[3-(3-t-butyl-5-methyl-4-hydroxyphenyl)propionate] (Irganox 245, manufactured by BASF), 1,6-hexanediol-bis[3-(3,5-di-t-butyl-4-hydroxyphenyl)propionate] (Irganox 259, manufactured by BASF), octadecyl-3-(3,5-di-t-butyl-4-hydroxyphenyl)propionate (Irganox 1076, manufactured by BASF), N,N'-hexamethylenebis(3,5-di-t-butyl-4-hydroxyhydrocinnamamide) (Irganox 1098, manufactured by BASF), 1,3,5-trimethyl-2,4,6-tris(3,5-di-t-butyl-4-hydroxybenzyl)benzene (Irganox 1330, manufactured by BASF), tris-(3,5-di-t-butyl-4-hydroxybenzyl)-isocyanurate (Irganox 3114, manufactured by BASF), isooctyl-3-(3,5-di-t-butyl-4-hydroxyphenyl)propionate (Irganox 1135, manufactured by BASF), 1,1,3-tris(2-methyl-4-hydroxy-5-t-butylphenyl)butane (ADK STAB AO-30, manufactured by ADEKA Corporation), 4,4'-butylidenebis-(3-methyl-6-t-butylphenol) (ADK STAB AO-40, manufactured by ADEKA Corporation), and 2,2'-thiobis-(4-methyl-6-t-butylphenol). These may be used, as the component (B1), alone or in combination of two or more compounds.

The content of the hindered phenol stabilizer (B1) is preferably 0.01 to 1.0 part by mass, and more preferably 0.02 to 0.5 parts by mass relative to 100 parts by mass of the ethylene-based resin (A).

Examples of the dialkyl thiodipropionate stabilizer (B2) include compounds having an alkyl group with 10 to 20 carbon atoms and having a molecular weight of 1,500 or less.

Specific examples of the dialkyl thiodipropionate stabilizer (B2), which is an optional stabilizer (B), include dilauryl thiodipropionate (DLTP "YOSHITOMI", manufactured by Yoshitomi pharmaceutical industries, ltd.), distearyl thiodipropionate (DSTP "YOSHITOMI", manufactured by Yoshitomi pharmaceutical industries, ltd.), and dimyristyl thiodipropionate (DMTP "YOSHITOMI", manufactured by Yoshitomi pharmaceutical industries, ltd.). These may be used, as the component (B2), alone or in combination of two or more compounds.

The content of the dialkyl thiodipropionate stabilizer (B2) is preferably 0.005 to 0.6 parts by mass, and more preferably 0.01 to 0.3 parts by mass relative to 100 parts by mass of the ethylene-based resin (A).

<Organic peroxide (C)>

Examples of the organic peroxide (C) contained in the crosslinkable resin composition of the present invention include publicly known compounds used as a crosslinking agent of ethylene-based resins.

Specific examples of the organic peroxide (C) include di-t-butyl-peroxide, 1,1-bis-t-butyl-peroxybenzoate, 2,2-bis-t-butyl-peroxybutane, t-butyl-peroxybenzoate, dicumylperoxide, 2,5-dimethyl-2,5-di-t-butyl-peroxyhexane, t-butylcumylperoxide, and 2,5-dimethyl-2,5-di-t-butyl-peroxyhexyne-3. These may be used alone or in combination of two or more compounds.

The content of the organic peroxide (C) in the crosslinkable resin composition of the present invention is usually 0.5 to 3.0 parts by mass, and preferably 1.0 to 2.5 parts by mass relative to 100 parts by mass of the ethylene-based resin (A).

When the content of the organic peroxide (C) is less than 0.5 parts by mass, the insulating coating layer that is finally formed has poor thermal deformation resistance.

On the other hand, when the content exceeds 3.0 parts by mass, the resulting crosslinkable resin composition has poor scorch resistance.

<Optional component>

Besides the ethylene-based resin (A), the stabilizer (B) containing the hindered amine light stabilizer (B3), the hindered phenol stabilizer (B1), the dialkyl thiodipropionate stabilizer (B2) and the organic peroxide (C), the crosslinkable resin composition of the present invention may contain an olefin-based resin other than the ethylene-based resin (A), various additives, and auxiliary materials as long as characteristics of the resin composition of the present invention are not impaired according to the purpose of use.

Examples of the olefin-based resins serving as the optional components include ethylene-vinyl acetate copolymers, ethylene-ethyl acrylate copolymers, ethylene-methyl acrylate copolymers, ethylene-butyl acrylate copolymers, ethylene-maleic acid copolymers, ethylene-diene compound copolymers, ethylene-vinylsilane copolymers, maleic anhydride grafted ethylene-based polymers, acrylic acid grafted ethylene-based polymers, and silane grafted ethylene-based polymers.

Examples of the additives and the auxiliary materials serving as the optional components include a stabilizer other than the stabilizer (B) described above, a processability improver, a dispersant, a copper inhibitor, an antistatic agent, a lubricant, carbon black, a crosslinking aid such as triallyl cyanurate, and an antiscorching agent such as $\alpha$-methylstyrene dimer.

The crosslinkable resin composition of the present invention can be prepared by mixing the essential components [ethylene-based resin (A), the stabilizer (B), and the organic peroxide (C)] and the optional components at a particular ratio, kneading the resulting mixture, and granulating the mixture.

The crosslinkable resin composition of the present invention is preferably provided in the form of pellets having an average particle size of about 2 to 7 mm from the viewpoint of the ease of engaging in a screw of an extruder, handleability, and the like.

Examples of the method for producing a pelletized crosslinkable resin composition include

(i) a method including mixing the ethylene-based resin (A), the stabilizer (B), the organic peroxide (C), and the optional components, melt-kneading the resulting mixture using a publicly known kneader (e.g., a Banbury mixer, a continuous mixer, a roller, or a biaxial extruder) by heating at a temperature that is equal to or higher than a melting point of the ethylene-based resin (A) but is lower than a decomposition temperature of the organic peroxide (C), and granulating the resulting resin composition in the form of pellets; and

(ii) a method including mixing the ethylene-based resin (A), the stabilizer (B), and the optional components, melt-kneading the resulting mixture using a publicly known kneader by heating at a temperature that is equal to or higher than a melting point of the ethylene-based resin (A), granulating the resulting kneaded product in the form of pellets, subsequently, adding, to the pelletized kneaded product, the organic peroxide (C) that is heated to a melting point thereof or higher to be in a liquid state, and, as required, aging the resulting product at a temperature lower than the melting point of the ethylene-based resin (A), thereby uniformly dispersing the organic peroxide (C) in the pellets.

<Electric wire/cable>

An electric wire/cable of the present invention includes a conductor and an insulating coating layer that covers the conductor, the insulating coating layer being formed by crosslinking the crosslinkable resin composition of the present invention, that is, the insulating coating layer being formed of a crosslinked product of the resin composition.

The electric wire/cable of the present invention can be produced by covering a conductor that is mainly formed of copper or aluminum with the crosslinkable resin composition of the present invention by extrusion molding, and crosslinking the crosslinkable resin composition to form an insulating coating layer.

In general, in a case of a low-voltage cable, a conductor is covered with only a single layer using a single-layer extruder. In a case of a high-voltage cable, a conductor is covered with a laminate including a first layer formed of an inner semi-conducting layer resin composition, a second layer formed of the crosslinkable resin composition of the present invention, and a third layer formed of an outer semi-conducting layer resin composition using a three-layer extruder at a temperature that is equal to or higher than a melting point of each resin but is lower than a decomposition temperature of the organic peroxide (C). Subsequently, the resin composition is crosslinked by performing heating at a temperature equal to or higher than the decomposition temperature of the organic peroxide (C) in an atmosphere of nitrogen, water vapor, silicone oil, a molten salt, or the like. Through the above steps, the cables can be produced.

The electric wire/cable of the present invention has good properties such as mechanical properties, electrical properties (insulating properties of the coating layer), and long-term storage properties. Furthermore, during the production of the electric wire/cable (extrusion molding step), an increase in the pressure in an extruder and a variation in the amount of discharge are small, and stable extrusion molding can be continuously performed for a long time.

EXAMPLES

Examples of the present invention will be described below. However, the present invention is not limited to these Examples. Here, ethylene-based resins, stabilizers, and organic peroxides used for producing resin compositions of Examples and Comparative Examples are as follows.

Reduced viscosities of each of stabilizers described below and hindered amine light stabilizer (B3), which are mixtures of stabilizers, were determined in accordance with ISO 1628-1 or JIS K7367-3 (2002) by diluting the stabilizer (mixture) with xylene to prepare diluted solutions having different concentrations, measuring dynamic viscosities at 40°C and 110°C with a capillary viscometer, and then converting the dynamic viscosities to reduced viscosities.

• Resin (A-1):
High-pressure process low-density ethylene homopolymer, melt mass-flow rate (MFR) = 2.2 g/10 min., density 0.922 g/cm$^3$ (manufactured by NUC Corporation)

• Stabilizer (B1-1):

- Hindered phenol stabilizer (B1), molecular weight = 1,178
- Compound name: Tetrakis[methylene-3-(3,5'-di-t-butyl-4'-hydroxyphenyl)propionate]methane
- Trade name: Irganox 1010 (manufactured by BASF)
- Reduced viscosity (40°C): 3.2 cm$^3$/g
- Reduced viscosity (110°C): 1.9 cm$^3$/g
- Melting point or glass transition point: 110°C to 125°C

• Stabilizer (B1-2):

- Hindered phenol stabilizer (B1), molecular weight = 359
- Compound name: 4,4'-Thiobis-(3-methyl-6-t-butylphenol)
- Trade name: SEENOX BCS (manufactured by Shipro Kasei Kaisha, Ltd.)
- Reduced viscosity (40°C): 2.7 cm$^3$/g
- Reduced viscosity (110°C): 1.3 cm$^3$/g
- Melting point or glass transition point: 160°C

• Stabilizer (B2-1):

- Dialkyl thiodipropionate stabilizer (B2), molecular weight = 682
- Compound name: Distearyl thiodipropionate
- Trade name: DSTP "YOSHITOMI" (manufactured by Yoshitomi pharmaceutical industries, ltd.)
- Reduced viscosity (40°C): 3.8 cm$^3$/g
- Reduced viscosity (110°C): 2.6 cm$^3$/g
- Melting point or glass transition point: 64°C to 67°C

• Stabilizer (B3-1):

- Low-molecular-weight hindered amine compound (Low-molecular-weight HALS), molecular weight = 481
- Compound name: Bis(2,2,6,6-tetramethyl-4-piperidyl)sebacate
- Trade name: LA-77 (manufactured by ADEKA Corporation)
- Reduced viscosity (40°C): 2.7 cm$^3$/g
- Reduced viscosity (110°C): 1.6 cm$^3$/g
- Melting point or glass transition point: 81°C to 85°C

• Stabilizer (B3-2):

- Low-molecular-weight hindered amine compound (Low-molecular-weight HALS), molecular weight = 847
- Compound name: Tetrakis(1,2,2,6,6-pentamethyl-4-piperidyl)butane-1,2,3,4-tetracalboxylate
- Trade name: LA-52 (manufactured by ADEKA Corporation)
- Reduced viscosity (40°C): 3.0 cm$^3$/g
- Reduced viscosity (110°C): 2.0 cm$^3$/g
- Melting point or glass transition point: 65°C to 68°C

• Stabilizer (B3-3):

- High-molecular-weight hindered amine compound (High-molecular-weight HALS), molecular weight = 2,000 to 3,100
- Compound name: Poly((6-((1,1,3,3-tetramethylbutyl)amino)-1,3,5-triadine-2,4-diyl)(2-(2,2,6,6-tetramethyl-4-piperidyl)imino))hexamethylene((2,2,6,6-tetramethyl-4-piperidyl)imino))
- Trade name: CHIMASSORB 944 (manufactured by BASF)
- Reduced viscosity (40°C): 7.3 $cm^3/g$
- Reduced viscosity (110°C): 4.7 $cm^3/g$
- Melting point or glass transition point: 100°C to 135°C

• Stabilizer (B3-4):

- High-molecular-weight hindered amine compound (High-molecular-weight HALS), molecular weight = 3,100 to 4,000
- Polycondensate of dimethyl succinate with 1-(2-hydroxyethyl)-4-hydroxy-2,2,6,6-tetramethyl-4-piperidine
- Trade name: TINUVIN 622 (manufactured by BASF)
- Reduced viscosity (40°C): 20.3 $cm^3/g$
- Reduced viscosity (110°C): 14.1 $cm^3/g$
- Melting point or glass transition point: 55°C to 77°C

• Organic peroxide (C-1): Dicumylperoxide

<Example 1>

In accordance with the formula shown in Table 1 below, 100 parts by mass of the resin (A-1) and a mixture of 0.1 parts by mass of the stabilizer (B1-1) and 0.1 parts by mass of the stabilizer (B1-2) serving as the hindered phenol stabilizer (B1), 0.1 parts by mass of the stabilizer (B2-1) serving as the dialkyl thiodipropionate stabilizer (B2), and 0.0035 parts by mass of the stabilizer (B3-1) and 0.0015 parts by mass of the stabilizer (B3-3) serving as the hindered amine light stabilizer (B3) were mixed. The resulting mixture was kneaded with a Banbury mixer at a temperature of 180°C for 10 minutes. Subsequently, the resulting kneaded product was granulated into pellets having a diameter of 3 mm and a length of 2 mm.

Next, 1.6 parts by mass of the organic peroxide (C-1) that was heated to be in a liquid state was added to the pelletized kneaded product. The resulting kneaded product was mixed in a heated state at 60°C in a blender for three hours, and then cooled to room temperature. Thus, a crosslinkable resin composition of the present invention was obtained.

<Example 2>

A crosslinkable resin composition of the present invention was obtained as in Example 1 except that a mixture of 0.0025 parts by mass of the stabilizer (B3-1) and 0.0025 parts by mass of the stabilizer (B3-3) was used as the hindered amine light stabilizer (B3) in accordance with the formula shown in Table 1 below.

<Example 3>

A crosslinkable resin composition of the present invention was obtained as in Example 1 except that a mixture of 0.002 parts by mass of the stabilizer (B3-1) and 0.003 parts by mass of the stabilizer (B3-3) was used as the hindered amine light stabilizer (B3) in accordance with the formula shown in Table 1 below.

<Example 4>

A crosslinkable resin composition of the present invention was obtained as in Example 1 except that a mixture of 0.01 parts by mass of the stabilizer (B3-1) and 0.01 parts by mass of the stabilizer (B3-3) was used as the hindered amine light stabilizer (B3) in accordance with the formula shown in Table 1 below.

<Example 5>

A crosslinkable resin composition of the present invention was obtained as in Example 1 except that a mixture of 0.0025 parts by mass of the stabilizer (B3-2) and 0.0025 parts by mass of the stabilizer (B3-3) was used as the hindered amine light stabilizer (B3) in accordance with the formula shown in Table 1 below.

<Comparative Example 1>

A crosslinkable resin composition for comparison was obtained as in Example 1 except that 0.02 parts by mass of the stabilizer (B3-1) was used as a hindered amine light stabilizer in accordance with the formula shown in Table 1 below.

<Comparative Example 2>

A crosslinkable resin composition for comparison was obtained as in Example 1 except that 0.01 parts by mass of the stabilizer (B3-1) was used as a hindered amine light stabilizer in accordance with the formula shown in Table 1 below.

<Comparative Example 3>

A crosslinkable resin composition for comparison was obtained as in Example 1 except that 0.005 parts by mass of the stabilizer (B3-1) was used as a hindered amine light stabilizer in accordance with the formula shown in Table 1 below.

<Comparative Example 4>

A crosslinkable resin composition for comparison was obtained as in Example 1 except that a mixture of 0.0015 parts by mass of the stabilizer (B3-1) and 0.0035 parts by mass of the stabilizer (B3-3) (mixture having excessively high reduced viscosities at 40°C and 110°C) was used as a hindered amine light stabilizer in accordance with the formula shown in Table 1 below.

<Comparative Example 5>

A crosslinkable resin composition for comparison was obtained as in Example 1 except that 0.005 parts by mass of the stabilizer (B3-3) was used as a hindered amine light stabilizer in accordance with the formula shown in Table 1 below.

<Comparative Example 6>

A crosslinkable resin composition for comparison was obtained as in Example 1 except that 0.005 parts by mass of the stabilizer (B3-2) was used as a hindered amine light stabilizer in accordance with the formula shown in Table 1 below.

<Comparative Example 7>

A crosslinkable resin composition for comparison was obtained as in Example 1 except that a mixture of 0.0025 parts by mass of the stabilizer (B3-1) and 0.0025 parts by mass of the stabilizer (B3-4) (mixture having excessively high reduced viscosities at 40°C and 110°C) was used as a hindered amine light stabilizer in accordance with the formula shown in Table 1 below.

<Comparative Example 8>

A crosslinkable resin composition for comparison was obtained as in Example 1 except that 0.005 parts by mass of the stabilizer (B3-4) was used as a hindered amine light stabilizer in accordance with the formula shown in Table 1 below.

<Comparative Example 9>

A crosslinkable resin composition for comparison was obtained as in Example 1 except that no hindered amine light stabilizer was mixed in accordance with the formula shown in Table 1 below.

For each of the crosslinkable resin compositions obtained in Examples 1 to 5 and Comparative Examples 1 to 9 described above, extrusion stability (rate of increase in pressure), extrusion stability (torque variation), the amount of water production, long-term storage property, and water-tree resistance were evaluated and measured. The methods for the evaluation and measurement are described in (1) to (5) below. The results are also shown in Table 1.

(1) Extrusion stability (rate of increase in pressure):

A screen mesh of 80/150/400/80 mesh was attached to a single-screw extruder "Labo Plastomill" (manufactured by Toyo Seiki Seisaku-Sho, Ltd.) having an effective length (L/D) = 25. Each of the crosslinkable resin compositions obtained in Examples and Comparative Examples was extruded at a temperature of 115°C and at a rotational speed of 30 rpm. The pressure in the extruder immediately after the start of extrusion and the pressure in the extruder 8 hours from the start of the extrusion were measured, and the rate of increase in the pressure was calculated. Regarding evaluation criteria, when the rate of increase was less than 2%, the resin composition was evaluated as acceptable (A), and when the rate of increase was 2% or more, the resin composition was evaluated as unacceptable (B).

(2) Extrusion stability (torque variation):

During the extrusion of (1) described above, a screw torque was continuously measured. Whether or not 20% or more of a torque variation occurred relative to an average of the screw torque was determined. When 20% or more of a torque variation did not occur, the resin composition was evaluated as acceptable (A). When 20% or more of a torque variation occurred at least once, the resin composition was evaluated as unacceptable (B). The occurrence of a torque variation causes a variation in the amount of discharge from the extruder. Therefore, by observing the state of the torque variation, the state of the variation in the amount of discharge can be grasped.

(3) Amount of water production:

Each of the crosslinkable resin compositions obtained in Examples and Comparative Examples was preliminarily formed into a sheet using a compression press molding machine at 120°C and at 0.5 MPa for 5 minutes. Subsequently, the resulting sheet was crosslinked at 180°C and at 15 MPa for 20 minutes to prepare a sheet having a thickness of 6 mm.

The sheet was stored in an air atmosphere at 80°C for two days. Subsequently, 2 g of the sheet was cut out from a central portion in the thickness direction of the 6-mm sheet to prepare a sample. The water content of the sample was measured using a Karl Fischer moisture meter under the conditions of a measurement temperature of 200°C and a measurement time of 20 minutes.

(4) Long-term storage property:

Each of the crosslinkable resin compositions obtained in Examples and Comparative Examples was stored under an overheating condition of 80°C for 14 days.

For each of the resin compositions before and after the storage, a maximum torque at a measurement temperature of 180°C was measured using a moving die rheometer (MDR) in accordance with ISO 6502/JIS K6300-2. When a ratio ($T/T_0$) of a maximum torque (T) after the storage to a maximum torque ($T_0$) before the storage was 80% or more, the resin composition was evaluated as acceptable (A). When the ratio ($T/T_0$) was less than 80%, the resin composition was evaluated as unacceptable (B).

(5) Water-tree resistance:

Each of the crosslinkable resin compositions obtained in Examples and Comparative Examples was preliminarily formed into a sheet using a compression press molding machine at 120°C and at 0.5 MPa for 5 minutes. Subsequently, the resulting sheet was crosslinked at 180°C and at 15 MPa for 20 minutes to prepare a sheet having a thickness of 3 mm.

An alternating-current voltage of 1 kV/1,000 Hz was applied to the sheet using a water electrode for 500 hours. The sheet was then sliced in the thickness direction to have a size of about 0.1 mm to prepare 10 sliced pieces. The sliced pieces were immersed in a methylene blue staining solution and stained. The stained sliced pieces were observed with an optical microscope, and whether or not a water tree was generated was examined. When the generation of a water tree was not observed, the resin composition was evaluated as acceptable (A). When the generation of a water tree was observed, the resin composition was evaluated as unacceptable (B).

[Table 1]

| | | Example 1 | Example 2 | Example 3 | Example 4 | Example 5 | Com. Ex. 1 | Com. Ex. 2 |
|---|---|---|---|---|---|---|---|---|
| Resin (A-1) | | 100 | 100 | 100 | 100 | 100 | 100 | 100 |
| Stabilizer (B1-1) | | 0.1 | 0.1 | 0.1 | 0.1 | 0.1 | 0.1 | 0.1 |
| Stabilizer (B1-2) | | 0.1 | 0.1 | 0.1 | 0.1 | 0.1 | 0.1 | 0.1 |
| Stabilizer (B2-1) | | 0.1 | 0.1 | 0.1 | 0.1 | 0.1 | 0.1 | 0.1 |
| Stabilizer (B3-1) | Low-molecular-weight HALS | 0.0035 | 0.0025 | 0.002 | 0.01 | - | 0.02 | 0.01 |
| Stabilizer (B3-2) | | - | - | - | - | 0.0025 | - | - |
| Stabilizer (B3-3) | High-molecular-weight HALS | 0.0015 | 0.0025 | 0.003 | 0.01 | 0.0025 | - | - |
| Stabilizer (B3-4) | | - | - | - | - | - | - | - |
| Organic peroxide (C-1) | | 1.6 | 1.6 | 1.6 | 1.6 | 1.6 | 1.6 | 1.6 |
| Weight-average molecular weight (Mw) of stabilizer (B3) | | 900 to 1,300 | 1,200 to 1,800 | 1,400 to 2,100 | 1,200 to 1,800 | 1,400 to 2,000 | 481 | 481 |
| Ratio of high-molecular weight HALS [%] | | 30 | 50 | 60 | 50 | 50 | 0 | 0 |
| Reduced viscosity of stabilizer (B3) (40°C) [$cm^3/g$] | | 3.9 | 4.8 | 5.4 | 4.8 | 5.2 | 2.7 | 2.7 |
| Reduced viscosity of stabilizer (B3) (110°C) [$cm^3/g$] | | 2.5 | 3.1 | 3.5 | 3.1 | 3.4 | 1.6 | 1.6 |
| Extrusion stability | Rate of increase in pressure [%] | 0.8 | 0.6 | 1.2 | 1.5 | 1.3 | 1.0 | 0.9 |
| | Evaluation | A | A | A | A | A | A | A |
| | Torque variation | A | A | A | A | A | B | B |
| Amount of water production [ppm] | | 65 | 68 | 69 | 60 | 70 | 67 | 60 |
| Long-term storage property | | A | A | A | A | A | A | A |
| Water-tree resistance | | A | A | A | A | A | A | A |

Com. Ex.: Comparative Example

[Table 1] (Continued from the previous page)

| | | Com. Ex. 3 | Com. Ex. 4 | Com. Ex. 5 | Com. Ex. 6 | Com. Ex. 7 | Com. Ex. 8 | Com. Ex. 9 |
|---|---|---|---|---|---|---|---|---|
| Resin (A-1) | | 100 | 100 | 100 | 100 | 100 | 100 | 100 |
| Stabilizer (B1-1) | | 0.1 | 0.1 | 0.1 | 0.1 | 0.1 | 0.1 | 0.1 |
| Stabilizer (B1-2) | | 0.1 | 0.1 | 0.1 | 0.1 | 0.1 | 0.1 | 0.1 |
| Stabilizer (B2-1) | | 0.1 | 0.1 | 0.1 | 0.1 | 0.1 | 0.1 | 0.1 |
| Stabilizer (B3-1) | Low-molecular-weight HALS | 0.005 | 0.0015 | - | - | 0.0025 | - | - |
| Stabilizer (B3-2) | | - | - | - | 0.005 | - | - | - |
| Stabilizer (B3-3) | High-molecular-weight HALS | - | 0.0035 | 0.005 | - | - | - | - |
| Stabilizer (B3-4) | | - | - | - | - | 0.0025 | 0.005 | - |
| Organic peroxide (C-1) | | 1.6 | 1.6 | 1.6 | 1.6 | 1.6 | 1.6 | 1.6 |
| Weight-average molecular weight (Mw) of stabilizer (B3) | | 481 | 1,500 to 2,300 | 2,000 to 3,100 | 847 | 1,800 to 2,200 | 3,100 to 4,000 | - |
| Ratio of high-molecular weight HALS [%] | | 0 | 70 | 100 | 0 | 50 | 100 | - |
| Reduced viscosity of stabilizer (B3) (40°C) [$cm^3/g$] | | 2.7 | 5.8 | 7.3 | 3.0 | 10.2 | 20.3 | - |
| Reduced viscosity of stabilizer (B3) (110°C) [$cm^3/g$] | | 1.6 | 3.8 | 4.7 | 2.0 | 6.5 | 14.1 | - |
| Extrusion stability | Rate of increase in pressure [%] | 0.8 | 2.5 | 18.5 | 0.9 | 19.3 | 22.8 | 0.5 |
| | Evaluation | A | B | B | A | B | B | A |
| | Torque variation | A | A | A | A | A | A | A |
| Amount of water production [ppm] | | 69 | 66 | 67 | 68 | 65 | 70 | 157 |
| Long-term storage property | | B | A | A | B | A | A | B |
| Water-tree resistance | | A | A | A | A | A | A | B |

Com. Ex.: Comparative Example

As is apparent from the results shown in Table 1, regarding each of the crosslinkable resin compositions obtained in Examples 1 to 5, the rate of increase in the pressure in the extruder charged with the crosslinkable resin composition is low, 20% or more of a torque variation is not observed during extrusion, and the amount of discharge is also stable. Accordingly, these crosslinkable resin compositions have good extrusion stability.

Therefore, according to the crosslinkable resin compositions obtained in Examples 1 to 5, an insulating coating layer can be continuously and stably formed by extrusion molding for a long time, and an increase in the production unit of an electric wire/cable can be realized.

Furthermore, in the crosslinkable resin compositions obtained in Examples 1 to 5, the change in the maximum

torque before and after the storage under a heating condition is small, and thus these crosslinkable resin compositions have good long-term storage properties.

In addition, these crosslinkable resin compositions each have a small amount of water production and good water-tree resistance, and thus are suitable as insulating coating materials of an electric wire/cable.

In contrast, the resin compositions obtained in Comparative Examples 1 and 2 each contain only a low-molecular-weight hindered amine compound as a hindered amine light stabilizer. The reduced viscosities of the hindered amine light stabilizer at 40°C and 110°C are excessively low. Thus, each of the resin compositions has a large torque variation and has poor extrusion stability.

The resin compositions obtained in Comparative Examples 3 and 6 each contain only a low-molecular-weight hindered amine compound as a hindered amine light stabilizer. The reduced viscosities of the hindered amine light stabilizer at 40°C and 110°C are excessively low. Thus, the resin compositions have poor long-term storage properties.

Regarding each of the resin compositions obtained in Comparative Examples 4 and 7, the reduced viscosities of the hindered amine light stabilizer at 40°C and 110°C are excessively high. Thus, the rate of increase in the pressure in the extruder charged with the resin composition is high, and the resin composition has poor extrusion stability.

The resin compositions obtained in Comparative Examples 5 and 8 each contain only a high-molecular-weight hindered amine compound as a hindered amine light stabilizer. The reduced viscosities of the hindered amine light stabilizer at 40°C and 110°C are excessively high. Thus, the rate of increase in the pressure in the extruder charged with the resin composition is high, and the resin composition has poor extrusion stability.

The crosslinkable resin composition obtained in Comparative Example 9 contains no hindered amine light stabilizer and thus has a poor long-term storage property and poor water-tree resistance.

## Claims

1. A crosslinkable resin composition comprising 100 parts by mass of an ethylene-based resin (A); a stabilizer (B) containing 0.001 to 0.5 parts by mass of a hindered amine light stabilizer (B3); and 0.5 to 3.0 parts by mass of an organic peroxide (C),

   wherein the stabilizer (B) further contains a hindered phenol stabilizer (B1) and a dialkyl thiodipropionate stabilizer (B2) in addition to the hindered amine light stabilizer (B3),
   wherein the hindered amine light stabilizer (B3) is a mixture of a low-molecular-weight hindered amine compound having a molecular weight of 100 to 1,000 and a high-molecular-weight hindered amine compound having a molecular weight of 1,500 to 5,000, and
   the hindered amine light stabilizer (B3) has a reduced viscosity of 3.5 to 5.5 $cm^3/g$ measured at a temperature of 40°C and a reduced viscosity of 2.0 to 3.5 $cm^3/g$ measured at a temperature of 110°C in accordance with ISO 1628-1 or JIS K7367-1.

2. The crosslinkable resin composition according to claim 1, wherein the hindered amine light stabilizer (B3) has a weight-average molecular weight (Mw) of 700 to 2,300.

3. The crosslinkable resin composition according to claim 1 or 2, wherein a ratio of the high-molecular-weight hindered amine compound to the hindered amine light stabilizer (B3) is 30% to 60% by mass.

4. The crosslinkable resin composition according to claim 1 comprising:

   100 parts by mass of an ethylene-based resin (A);
   0.01 to 1.0 part by mass of a hindered phenol stabilizer (B1);
   0.005 to 0.6 parts by mass of a dialkyl thiodipropionate stabilizer (B2);
   0.001 to 0.5 parts by mass of a hindered amine light stabilizer (B3); and
   0.5 to 3.0 parts by mass of an organic peroxide (C),
   wherein the hindered amine light stabilizer (B3) is a mixture of 40% to 70% by mass of the low-molecular-weight hindered amine compound and 60% to 30% by mass of the high-molecular-weight hindered amine compound,
   the hindered amine light stabilizer (B3) has a reduced viscosity of 3.9 to 5.4 $cm^3/g$ measured at a temperature of 40°C and a reduced viscosity of 2.5 to 3.5 $cm^3/g$ measured at a temperature of 110°C in accordance with ISO 1628-1 or JIS K7367-1, and
   the hindered amine light stabilizer (B3) has a weight-average molecular weight (Mw) of 900 to 2,100.

5. An electric wire/cable comprising a conductor; and an insulating coating layer that covers the conductor, the insulating

coating layer being formed by crosslinking the crosslinkable resin composition according to any one of claims 1 to 4.

**Patentansprüche**

1. Vernetzbare Harzzusammensetzung, umfassend 100 Massenteile eines Harzes (A)auf Ethylenbasis; einen Stabilisator (B), enthaltend 0,001 bis 0,5 Massenteile eines gehinderten Amin-Lichtstabilisators (B3); und 0,5 bis 3,0 Massenteile eines organischen Peroxids (C),

   wobei der Stabilisator (B) ferner einen gehinderten Phenolstabilisator (B1) und einen Dialkylthiodipropionatstabilisator (B2) zusätzlich zu dem gehinderten Amin-Lichtstabilisator (B3) enthält,
   wobei der gehinderte Amin-Lichtstabilisator (B3) eine Mischung aus einer niedermolekularen gehinderten Aminverbindung mit einem Molekulargewicht von 100 bis 1.000 und einer hochmolekularen gehinderten Aminverbindung mit einem Molekulargewicht von 1.500 bis 5.000 ist, und
   der gehinderte Amin-Lichtstabilisator (B3) eine reduzierte Viskosität von 3,5 bis 5,5 $cm^3/g$, gemessen bei einer Temperatur von 40°C, und eine reduzierte Viskosität von 2,0 bis 3,5 $cm^3/g$, gemessen bei einer Temperatur von 110°C, gemäß ISO 1628-1 oder JIS K7367-1 aufweist.

2. Vernetzbare Harzzusammensetzung nach Anspruch 1, wobei der gehinderte Amin-Lichtstabilisator (B3) ein gewichtsmittleres Molekulargewicht (Mw) von 700 bis 2.300 aufweist.

3. Vernetzbare Harzzusammensetzung nach Anspruch 1 oder 2, wobei ein Verhältnis der hochmolekularen gehinderten Aminverbindung zu dem gehinderten Amin-Lichtstabilisator (B3) 30 bis 60 Massen-% beträgt.

4. Vernetzbare Harzzusammensetzung, nach Anspruch 1, umfassend:

   100 Masseteile eines Harzes (A) auf Ethylenbasis;
   0,01 bis 1,0 Masseteile eines gehinderten Phenolstabilisators (B1);
   0,005 bis 0,6 Masseteile eines Dialkylthiodipropionatstabilisators (B2);
   0,001 bis 0,5 Masseteile eines gehinderten Amin-Lichtstabilisators (B3); und
   0,5 bis 3,0 Masseteile eines organischen Peroxids (C),
   wobei der gehinderte Amin-Lichtstabilisator (B3) eine Mischung aus 40 bis 70 Massen-% einer niedermolekularen gehinderten Aminverbindung mit einem Molekulargewicht von 100 bis 1.000 und 60 bis 30 Massen-% einer hochmolekularen gehinderten Aminverbindung mit einem Molekulargewicht von 1.500 bis 5.000 ist,
   der gehinderte Amin-Lichtstabilisator (B3) eine verringerte Viskosität von 3,9 bis 5,4 $cm^3/g$, gemessen bei einer Temperatur von 40°C, und eine reduzierte Viskosität von 2,5 bis 3,5 cm3/g, gemessen bei einer Temperatur von 110°C, gemäß ISO 1628-1 oder JIS K7367-1 aufweist, und
   der gehinderte Amin-Lichtstabilisator (B3) ein gewichtsmittleres Molekulargewicht (Mw) von 900 bis 2.100 aufweist.

5. Elektrischer Draht/Kabel, umfassend einen Leiter und eine isolierende Beschichtung, die den Leiter bedeckt, wobei die isolierende Beschichtung durch Vernetzung der vernetzbaren Harzzusammensetzung nach einem der Ansprüche 1 bis 4 gebildet wird.

**Revendications**

1. Composition de résine réticulable comprenant 100 parties en masse d'une résine à base d'éthylène (A) ; un stabilisant (B) contenant de 0,001 à 0,5 partie en masse d'un photostabilisant à amine encombrée (B3) ; et de 0,5 à 3,0 parties en masse d'un peroxyde organique (C),

   le stabilisant (B) contenant en outre un stabilisant à phénol encombré (B1) et un stabilisant à base de thiodipropionate de dialkyle (B2) en plus du photostabilisant à amine encombrée (B3),
   le photostabilisant à amine encombrée (B3) étant un mélange d'un composé à amine encombrée à bas poids moléculaire ayant un poids moléculaire de 100 à 1000 et d'un composé à amine encombrée à haut poids moléculaire ayant un poids moléculaire de 1500 à 5000, et
   le photostabilisant à amine encombrée (B3) ayant une viscosité réduite de 3,5 à 5,5 $cm^3/g$ mesurée à une température de 40 °C et une viscosité réduite de 2,0 à 3,5 $cm^3/g$ mesurée à une température de 110 °C

conformément à l'ISO 1628-1 ou la JIS K7367-1.

2. Composition de résine réticulable selon la revendication 1, dans laquelle le photostabilisant à amine encombrée (B3) a un poids moléculaire moyen en poids (Mw) de 700 à 2300.

3. Composition de résine réticulable selon la revendication 1 ou 2, dans laquelle un rapport du composé à amine encombrée à haut poids moléculaire au photostabilisant à amine encombrée (B3) va de 30 % à 60 % en masse.

4. Composition de résine réticulable selon la revendication 1 comprenant :

100 parties en masse d'une résine à base d'éthylène (A) ;
0,01 à 1,0 partie en masse d'un stabilisant à phénol encombré (B1) ;
0,005 à 0,6 partie en masse d'un stabilisant à base de thiodipropionate de dialkyle (B2) ;
0,001 à 0,5 partie en masse d'un photostabilisant à amine encombrée (B3) ; et
0,5 à 3,0 parties en masse d'un peroxyde organique (C),
le photostabilisant à amine encombrée (B3) étant un mélange de 40 % à 70 % en masse du composé à amine encombrée à bas poids moléculaire et de 60 % à 30 % en masse du composé à amine encombrée à haut poids moléculaire, le photostabilisant à amine encombrée (B3) ayant une viscosité réduite de 3,9 à 5,4 $cm^3/g$ mesurée à une température de 40 °C et une viscosité réduite de 2,5 à 3,5 $cm^3/g$ mesurée à une température de 110 °C conformément à l'ISO 1628-1 ou la JIS K7367-1, et
le photostabilisant à amine encombrée (B3) ayant un poids moléculaire moyen en poids (Mw) de 900 à 2100.

5. Fil/câble électrique comprenant un conducteur ; et une couche de revêtement isolante qui recouvre le conducteur, la couche de revêtement isolante étant formée en réticulant la composition de résine réticulable selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002083516 A
- JP 2014244512 A